# EUROPÄISCHE PATENTSCHRIFT

(11) **EP 3 771 556 B1**
(45) Veröffentlichungstag und Bekanntmachung des Hinweises auf die Patenterteilung: **29.09.2021**
(21) Anmeldenummer: 19189238.9
(22) Anmeldetag: 30.07.2019
(51) Int. Cl.: B32B 5/26, D04H 3/018, D04H 3/147, D04H 3/007

(54) **SPINNVLIESLAMINAT UND VERFAHREN ZUR ERZEUGUNG EINES SPINNVLIESLAMINATES**
SPUN NONWOVEN LAMINATE AND METHOD FOR PRODUCING A SPUNBONDED NONWOVEN LAMINATE
STRATIFIÉ NON-TISSÉ ET PROCÉDÉ DE FABRICATION D'UN STRATIFIÉ NON-TISSÉ

(43) Veröffentlichungstag der Anmeldung: 03.02.2021
(73) Patentinhaber: Reifenhäuser GmbH & Co. KG Maschinenfabrik, 53844 Troisdorf (DE)
(72) Erfinder: WAGNER, Tobias, 50823 Köln (DE); SOMMER, Sebastian, 53844 Troisdorf (DE); BOHL, Patrick, 53773 Hennef (DE); RÖSNER, Andreas, 53129 Bonn (DE); GEUS, Hans Georg, 53859 Niederkassel (DE); LINKE, Gerold, 53773 Hennef (DE); KUNZE, Bernd, 53721 Siegburg (DE)
(74) Vertreter: Andrejewski - Honke Patent- und Rechtsanwälte Partnerschaft mbB

(56) Entgegenhaltungen:
- EP-A1- 1 369 518
- EP-A1- 2 708 623
- EP-A1- 3 246 444
- WO-A1-2014/022988
- US-A1- 2005 020 170

## Beschreibung

Die Erfindung betrifft ein Spinnvlieslaminat mit einer Mehrzahl von übereinander angeordneten Spunbond-Vlieslagen, wobei zumindest zwei der Spunbond-Vlieslagen gekräuselte Endlosfilamente aufweisen bzw. aus gekräuselten Endlosfilamenten bestehen bzw. im Wesentlichen bestehen. Die Erfindung betrifft weiterhin ein Verfahren zur Erzeugung eines solchen Spinnvlieslaminates. - Endlosfilamente unterscheiden sich aufgrund ihrer quasi endlosen Länge von Stapelfasern, die deutlich geringere Längen von beispielsweise 10 mm bis 60 mm aufweisen.

Spinnvlieslaminate der vorstehend genannten Art sind aus dem Stand der Technik und aus der Praxis in verschiedenen Ausführungsvarianten bekannt. Für viele Anwendungen benötigt man Vliesstoffe mit einer großen Dicke und mit einer hohen Weichheit. Eine große Dicke wird in der Regel durch Einsatz von gekräuselten bzw. gecrimpten Filamenten erzielt. Dazu werden vor allem Multikomponentenfilamente bzw. Bikomponentenfilamente mit Seite-an-Seite-Konfiguration oder mit exzentrischer Kern-Mantel-Konfiguration verwendet. Die Bereitstellung einer hohen Dicke und einer hohen Weichheit ist normalerweise mit einer verhältnismäßig geringen Festigkeit des Vliesstoffes verbunden. Das gilt einerseits für die Zugfestigkeit des Vliesstoffes in Maschinenrichtung (MD). Andererseits gilt das aber insbesondere auch für die Abriebsfestigkeit der Vliesoberfläche. Insoweit beeinflusst eine Steigerung der Dicke und der Weichheit häufig das Abrasionsverhalten der Vliesstoffe in nachteilhafter Weise. Von daher besteht ein Zielkonflikt. Die Lösung stellt den Fachmann bislang vor Probleme. Neben einem hohen Widerstand der Vliesstoffe bzw. der Vliesstoffoberfläche gegen abrasive Beanspruchungen ist auch eine möglichst weitgehende Opazität der Vliesstoffe oftmals wünschenswert. Auch dieser Anforderung genügen viele aus dem Stand der Technik bekannte Vliesstoffe bzw. Vlieslaminate nicht.

EP 1 369 518 offenbart ein Laminat umfassend zwei Spinnvlieslagen mit gekräuselten Multikomponentenfilamenten. Die Filamente beider Lagen weisen an ihrer Außenseite eine erste Komponente aus Polyethylen auf.

Der Erfindung liegt das technische Problem zugrunde, ein Spinnvlieslaminat der eingangs genannten Art anzugeben, das sich einerseits durch eine große Dicke und eine hohe Weichheit auszeichnet und andererseits zusätzlich eine optimale Festigkeit aufweist und vor allem eine hohe Abriebsfestigkeit bzw. einen hohen Widerstand gegen abrasive Beanspruchungen zeigt. Im Übrigen soll das Spinnvlieslaminat auch eine sehr gute Opazität aufweisen. Der Erfindung liegt weiterhin das technische Problem zugrunde, ein Verfahren zur Erzeugung eines solchen Spinnvlieslaminates anzugeben.

Zur Lösung dieses technischen Problems lehrt die Erfindung ein Spinnvlieslaminat mit einer Mehrzahl von übereinander angeordneten Spunbond-Vlieslagen, wobei zumindest zwei der Spunbond-Vlieslagen gekräuselte Endlosfilamente aufweisen bzw. aus gekräuselten Endlosfilamenten bestehen bzw. im Wesentlichen bestehen,
wobei eine erste Spunbond-Vlieslage mit gekräuselten Multikomponentenfilamenten bzw. mit gekräuselten Bikomponentenfilamenten vorgesehen ist, wobei zumindest eine an der Außenoberfläche der Filamente der ersten Lage angeordnete erste Komponente aus Polyethylen besteht bzw. im Wesentlichen besteht, wobei zumindest eine weitere bzw. eine zweite Komponente der Filamente der ersten Lage aus einem Kunststoff besteht bzw. im Wesentlichen besteht, der einen höheren Schmelzpunkt aufweist als das Polyethylen der ersten Komponente der Filamente der ersten Lage,
wobei das Spinnvlieslaminat eine zweite äußerste Spunbond-Vlieslage mit Multikomponentenfilamenten bzw. Bikomponentenfilamenten, insbesondere mit gekräuselten Multikomponentenfilamenten bzw. Bikomponentenfilamenten als Deckschicht aufweist, wobei zumindest eine erste an der Außenoberfläche der Filamente der zweiten Lage angeordnete Komponente aus Polyethylen besteht bzw. im Wesentlichen besteht, wobei zumindest eine weitere bzw. eine zweite Komponente der Filamente der zweiten Lage aus einem Kunststoff besteht bzw. im Wesentlichen besteht, der einen höheren Schmelzpunkt aufweist als Polyethylen der ersten Komponente der Filamente der zweiten Lage
und wobei der Polyolefin-Anteil bzw. der Polyethylen-Anteil der ersten Komponente der Filamente der zweiten Lage höher ist als der Polyolefin-Anteil bzw. der Polyethylen-Anteil der ersten Komponente der Filamente der ersten Lage und wobei der Polyethylen-Anteil der ersten Komponente der Filamente der zweiten äußersten Lage geringer ist als der Titer der Filamente der ersten Lage.

Wenn hier oder nachfolgend in Bezug auf einen Kunststoff bzw. in Bezug auf ein Polymer "im Wesentlichen besteht" angegeben wird, meint dies insbesondere, dass das Polymer zu mindestens 95 Gew.-%, vorzugsweise zu mindestens 97 Gew.-% und bevorzugt zu mindestens 98 Gew.-% vorhanden ist. Die restlichen Gew.-% können insbesondere von Additiven wie Weichmachern, Füllstoffen, Farben und dergleichen gebildet werden.

Erfindungsgemäß weist das Spinnvlieslaminat zumindest zwei Spunbond-Vlieslagen mit gekräuselten Endlosfilamenten auf. Nach einer empfohlenen Ausführungsform der Erfindung sind in dem erfindungsgemäßen Spinnvlieslaminat maximal vier Spunbond-Vlieslagen mit gekräuselten Endlosfilamenten vorhanden. Gemäß besonders bevorzugter Ausführungsform der Erfindung weist sowohl die erste Spunbond-Vlieslage als auch die zweite Spunbond-Vlieslage gekräuselte Multikomponentenfilamente bzw. gekräuselte Bikomponentenfilamente auf. Es liegt im Rahmen der Erfindung, dass die erste Spunbond-Vlieslage aus gekräuselten Multikomponentenfilamenten bzw. aus gekräuselten Bikomponentenfilamenten besteht bzw. im Wesentlichen besteht. Weiterhin liegt es im Rahmen der Erfindung, dass die zweite äußerste Spunbond-Vlieslage aus gekräuselten Multikomponentenfilamenten bzw. aus gekräuselten Bikomponentenfilamenten besteht bzw. im Wesentlichen besteht.

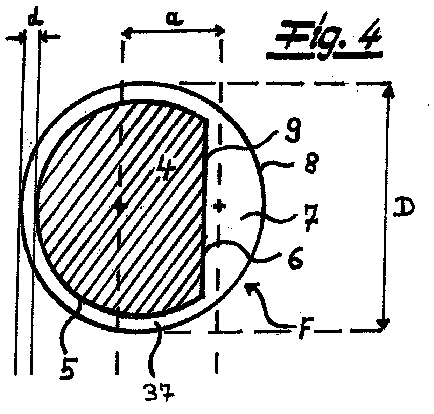

Erfindungsgemäß werden in der ersten Lage und bevorzugt auch in der weiteren zweiten Lage des erfindungsgemäßen Spinnvlieslaminates gekräuselte Endlosfilamente eingesetzt. Dabei weisen die Endlosfilamente zweckmäßigerweise eine Kräuselung mit mindestens 1,5, vorzugsweise mit mindestens 2,5 und bevorzugt mit mindestens 3 Schlingen (loops) pro Zentimeter ihrer Länge auf. Besonders bevorzugt ist hier eine Kräuselung mit 1,5 bis 3,5, vorzugsweise von 1,8 bis 3,2 und bevorzugt von 2 bis 3 Schlingen (loops) pro Zentimeter der Länge der Endlosfilamente. - Die Anzahl der Kräuselschlingen bzw. Kräuselbögen (loops) pro Zentimeter der Länge der Endlosfilamente wird dabei insbesondere nach der japanischen Norm JIS L-1015-1981 gemessen, indem die Kräuselungen unter einer Vorspannung von 2 mg/den in (1/10 mm) gezählt werden, wobei die nicht-ausgestreckte Länge der Filamente zugrunde liegt. Es wird eine Empfindlichkeit von 0,05 mm verwendet, um die Anzahl der Kräuselschlingen zu bestimmen. Die Messung wird zweckmäßigerweise durchgeführt mit einem "Favimat"-Gerät der Firma TexTechno, Deutschland. Dazu wird auf die Veröffentlichung "Automatic Crimp Measurement on Staple Fibres", Denkendorf Colloqium, "Textile Mess- und Prüftechnik", 9.11.99, Dr. Ulrich Mörschel (insbesondere Seite 4, Fig. 4) verwiesen. Die Filamente bzw. die Filamentprobe werden/wird hierzu als Filamentknäuel vor einer weiteren Verfestigung von der Ablage bzw. von dem Ablagesiebband abgenommen und die Filamente werden vereinzelt und gemessen.

Nach einer empfohlenen Ausführungsform ist der Kräuselungsgrad der Filamente der zweiten Lage des Laminates gleich oder kleiner als der Kräuselungsgrad der Filamente der ersten Lage. Diese Ausführungsform hat sich im Hinblick auf die Lösung des erfindungsgemäßen technischen Problems als besonders vorteilhaft bewährt.

Der Titer der Filamente der zweiten Lage (Deckschicht) ist geringer als der Titer der Filamente der ersten Lage. - Es empfiehlt sich, dass die Filamente der ersten Lage einen Titer von mehr als 1,5 den, vorzugsweise von mehr als 1,6 den und bevorzugt von mehr als 1,7 den aufweisen. Nach einer bevorzugten Ausführungsform der Erfindung liegt der Titer der Filamente der ersten Lage des erfindungsgemäßen Spinnvlieslaminates zwischen 1,5 den und 2,5 den, insbesondere zwischen 1,6 den und 2,4 den, vorzugsweise zwischen 1,7 den und 2,3 den, sehr bevorzugt zwischen 1,8 den und 2,2 den und besonders bevorzugt zwischen 2,0 den bis 2,2 den. - Es liegt im Rahmen der Erfindung, dass die Filamente der zweiten Lage einen Titer von weniger als 1,7 den, insbesondere von weniger als 1,6 den und nach einer empfohlenen Ausführungsform einen Titer von 0,8 den bis 1,6 den, insbesondere von 0,9 den bis 1,5 den und bevorzugt von 1,0 den bis 1,3 den aufweisen. Gemäß einer weiteren Ausführungsform der Erfindung können für die erste Lage Filamente mit einem Titer bis 12 den verwendet werden. Die Filamente der zweiten Lage weisen dann einen Titer von beispielsweise weniger als 6 den oder 6 den auf.

Es wurde bereits darauf hingewiesen, dass der Titer der Filamente der zweiten äußersten Lage geringer ist als der Titer der Filamente der ersten Lage. Bevorzugt beträgt der Unterschied bzw. die Differenz zwischen dem Titer der Filamente der ersten Lage und dem Titer der Filamente der zweiten Lage wenigstens 0,2 den, bevorzugt mindestens 0,3 den und empfohlenermaßen maximal 1,1 den, bevorzugt maximal 1,0 den. Gemäß einer weiteren Ausführungsform kann der Unterschied bzw. die Differenz zwischen dem Titer der ersten Lage und dem Titer der zweiten Lage maximal 4 den bis 6 den betragen. Dem nach bevorzugter Ausführungsform vorgesehenen Titergradient kommt im Hinblick auf die Lösung des erfindungsgemäßen technischen Problems besonders vorteilhafte Bedeutung zu.

Der Erfindung liegt die Erkenntnis zugrunde, dass es sich bei dem erfindungsgemäßen Spinnvlieslaminat um ein Produkt mit hoher Weichheit und großem Volumen bzw. großer Dicke handelt, das nichtsdestoweniger im Hinblick auf die Festigkeitseigenschaften allen Anforderungen genügt. Vor allem weist das erfindungsgemäße Spinnvlieslaminat eine hervorragende Widerstandsfähigkeit gegen Abrasion auf und insoweit eine optimale Abriebsfestigkeit. Auch die Zugfestigkeit in Maschinenrichtung (MD) weist sehr gute Werte auf, sodass das Laminat problemlos handhabbar und manipulierbar ist. Von besonderer Bedeutung ist im Rahmen der Erfindung, dass sich das erfindungsgemäße Spinnvlieslaminat durch eine optimal geschlossene homogene Oberfläche auszeichnet. Hierzu trägt insbesondere die zweite als Deckschicht eingesetzte Lage des Laminates bei. Es wird eine hervorragende Oberflächengleichmäßigkeit des Laminates erzielt und störende Erhebungen aus der Oberfläche oder störende Einbuchtungen in der Oberfläche können effektiv vermieden werden. Gleichzeitig ist die Laminatoberfläche nicht zu stumpf und weist optimale Gleiteigenschaften auf. Zu betonen ist weiterhin, dass das erfindungsgemäße Spinnvlieslaminat problemlos bei hohen Produktionsgeschwindigkeiten erzeugt werden kann und somit mit hoher Produktivität in einer Zwei-Balken-Anlage oder Mehrbalken-Anlage erzeugt werden kann. Das Spinnvlieslaminat zeichnet sich durch eine homogene Ablage und eine homogene Oberfläche aus und zwar ohne störende Filamentagglomerate, die insbesondere durch die nachteilhaften sogenannten Blow-Back-Effekte entstehen. Es ist noch zu ergänzen, dass sich das erfindungsgemäße Spinnvlieslaminat auf einfache und wenig aufwendige und somit kostengünstige Weise erzeugen lässt.

Die Erfindung ist dadurch gekennzeichnet, dass eine an der Außenoberfläche der Filamente der ersten Lage angeordnete erste Komponente aus Polyethylen besteht bzw. im Wesentlichen besteht. Es liegt im Rahmen der Erfindung, dass die an der Außenoberfläche der Filamente der ersten Lage vorgesehene erste Komponente aus einem Polyethylen einen geringeren Schmelzpunkt aufweist als die zweite Komponente bzw. als die weitere Komponente der Filamente der ersten Lage.

Eine besonders bevorzugte Ausführungsform der Erfindung ist dadurch gekennzeichnet, dass der Polyethylen-Anteil der Filamente der ersten Lage weniger als 40 Gew.-%, insbesondere weniger als 38 Gew.-% und bevorzugt weniger als 35 Gew.-% beträgt. Es empfiehlt sich, dass die Schmelzflussrate (MFR) des Polyethylens kleiner ist als 35 g/10 min, insbesondere kleiner ist als 30 g/10 min, vorzugsweise kleiner ist als 25 g/10 min und sehr bevorzugt kleiner ist als 20 g/10 min. Wenn hier und nachfolgend Schmelzflussraten (MFR) angegeben werden, so werden diese für Polypropylen insbesondere nach ASTM D1238-13 gemessen (Bedingung B, 2,16 kg, 230 °C) und für Polyethylen nach ASTM D1238-13 bei 190 °C/2,16 kg.

Eine bevorzugte Ausführungsform der Erfindung ist dadurch gekennzeichnet, dass die zumindest eine weitere Komponente bzw. die zweite Komponente der Filamente der ersten Lage aus Polypropylen oder aus einem Polyester besteht bzw. im Wesentlichen besteht. Für diese weitere/zweite Komponente kann anstelle von Polypropylen oder zusätzlich zu Polypropylen auch zumindest ein Polypropylen-Copolymer eingesetzt werden und anstelle des Polyesters oder zusätzlich zu dem Polyester auch zumindest ein Polyester-Copolymer eingesetzt werden. Als Polyester eignet sich insbesondere Polyethylenterephthalat (PET) und als Polyester-Copolymer insbesondere PET-Copolymer (Co-PET). Als Polyester kann aber auch Polybutylenterephthalat (PBT) oder Polylactid (PLA) eingesetzt werden. Ebenso können Copolymere dieser Kunststoffe verwendet werden. Eine empfohlene Ausführungsform der Erfindung ist dadurch gekennzeichnet, dass die zumindest eine weitere Komponente bzw. die zweite Komponente der Filamente der ersten Lage aus zumindest einem Kunststoff aus der Gruppe "Polypropylen, Polypropylen-Copolymer, Polyethylenterephthalat (PET), PET-Copolymer, Polybutylenterephthalat (PBT), PBT-Copolymer, Polylactid (PLA), PLA-Copolymer" besteht bzw. im Wesentlichen besteht. Eine ganz besonders empfohlene Ausführungsform ist dadurch gekennzeichnet, dass die erste - insbesondere niedriger schmelzende - Komponente der Filamente der ersten Lage aus Polyethylen besteht bzw. im Wesentlichen besteht und dass die zweite - insbesondere höher schmelzende Komponente - der Filamente der ersten Lage aus Polypropylen besteht bzw. im Wesentlichen besteht. Eine weitere Ausführungsform zeichnet sich dadurch aus, dass die erste - insbesondere niedriger schmelzende - Komponente der Filamente der ersten Lage aus Polyethylen besteht bzw. im Wesentlichen besteht und dass die zweite - insbesondere höher schmelzende - Komponente der Filamente der ersten Lage aus einem Polyester und/oder aus einem Polyester-Copolymer besteht bzw. im Wesentlichen besteht. Es liegt auch im Rahmen der Erfindung, dass für die zweite Komponente der Filamente der ersten Lage Mischungen bzw. Blends der genannten Polymere eingesetzt werden.

Nach besonders bevorzugter Ausführungsform der Erfindung weisen die Multikomponentenfilamente bzw. die Bikomponentenfilamente der ersten Lage eine exzentrische Kern-Mantel-Konfiguration auf. Diese Ausführungsform hat sich im Hinblick auf die Lösung des erfindungsgemäßen technischen Problems besonders bewährt. Eine sehr empfohlene Ausführungsform ist in diesem Zusammenhang dadurch gekennzeichnet, dass der Mantel der Filamente der ersten Lage mit exzentrischer Kern-Mantel-Konfiguration über zumindest 20 %, insbesondere über zumindest 30 %, vorzugsweise über zumindest 40 %, bevorzugt über zumindest 50 %, sehr bevorzugt über zumindest 60 % und besonders bevorzugt über zumindest 65 % des Filamentumfanges eine konstante Dicke d bzw. eine im Wesentlichen konstante Dicke d aufweist. Die Dicke d meint hier und nachfolgend insbesondere die mittlere Dicke d. Diese besonders bevorzugte Ausführungsform wird weiter unten noch näher erläutert.

Wenn nach sehr empfohlener Ausführungsform die Filamente der ersten Lage eine exzentrische Kern-Mantel-Konfiguration aufweisen, liegt es im Rahmen der Erfindung, dass die niedriger schmelzende erste Komponente in dem Mantel der Filamente vorgesehen ist und die höher schmelzende zumindest eine zweite Komponente bzw. die höher schmelzende zweite Komponente in dem Kern der Filamente vorhanden ist. So weisen nach einer ersten Ausführungsform der Erfindung die Multikomponentenfilamente bzw. Bikomponentenfilamente der ersten Lage eine exzentrische Kern-Mantel-Konfiguration auf, wobei der Mantel aus Polyethylen bzw. im Wesentlichen aus Polyethylen besteht und wobei der Kern aus Polypropylen oder Polypropylen-Copolymer besteht bzw. im Wesentlichen besteht. Gemäß einer zweiten Ausführungsform weisen die Multikomponentenfilamente bzw. Bikomponentenfilamente der ersten Lage eine exzentrische Kern-Mantel-Konfiguration auf, wobei der Mantel aus einem Polyolefin und/oder Polyolefin-Copolymer, insbesondere aus Polypropylen und/oder Polypropylen-Copolymer besteht bzw. im Wesentlichen besteht und wobei der Kern aus einem Polyester und/oder einem Polyester-Copolymer, insbesondere aus Polyethylenterephthalat (PET) und/oder PET-Copolymer besteht bzw. im Wesentlichen besteht. Besonders bevorzugt ist dabei die oben beschriebene exzentrische Kern-Mantel-Konfiguration mit konstanter Manteldicke d.

Wenn die weitere bzw. zweite Komponente der Filamente der ersten Lage aus Polypropylen und/oder Polypropylen-Copolymer besteht bzw. im Wesentlichen besteht, weist das Polypropylen bzw. das Polypropylen-Copolymer zweckmäßigerweise eine Schmelzflussrate (MFR) von mehr als 25 g/10 min, insbesondere von mehr als 30 g/10 min, vorzugsweise von mehr als 45 g/10 min, bevorzugt von mehr als 55 g/10 min und besonders bevorzugt von mehr als 60 g/10 min auf. Dabei lässt sich die Schmelzflussrate (MFR) des Polypropylens bzw. des Polypropylen-Copolymers durch Zusätze, insbesondere durch Polymerzusätze, Peroxid oder dergleichen einstellen.

Erfindungsgemäß ist vorgesehen, dass zumindest eine erste bzw. eine erste an der Außenoberfläche der Filamente der zweiten Lage (Deckschicht) angeordnete Komponente aus aus Polyethylen besteht bzw. im Wesentlichen besteht. Dabei ist erfindungsgemäß dieser Polyethylen-Anteil der ersten Komponente der Filamente der zweiten Lage höher als der Polyethylenanteil der ersten Komponente der Filamente der ersten Lage.

Vorzugsweise beträgt der Polyethylen-Anteil der Filamente der zweiten Lage mehr als 33 Gew.-%, zweckmäßigerweise mehr als 35 Gew.-% und bevorzugt mehr als 38 Gew.-%. Eine Ausführungsform der Erfindung ist dadurch gekennzeichnet, dass der Polyethylen-Anteil der Filamente der zweiten Lage 38 Gew.-% bis 67 Gew.-%, insbesondere 40 Gew.-% bis 65 Gew.-% und bevorzugt 40 Gew.-% bis 60 Gew.-% beträgt. Empfohlenermaßen beziehen sich diese Gewichtsprozent-Anteile auf die niedriger schmelzende erste Komponente der Filamente der zweiten Lage.

Eine empfohlene Ausführungsform der Erfindung ist dadurch gekennzeichnet, dass die an der Außenoberfläche der Filamente der zweiten Lage angeordnete erste Komponente aus Polyethylen bzw. im Wesentlichen aus Polyethylen besteht. Zweckmäßigerweise ist die Schmelzflussrate (MFR) dieses Polyethylens größer als 15 g/10 min, insbesondere größer als 20 g/10 min und bevorzugt größer als 27 g/10 min. Wenn nach einer bevorzugten Ausführungsform der Erfindung die an der Außenoberfläche der Filamente beider Lagen angeordnete erste Komponente jeweils aus Polyethylen besteht bzw. im Wesentlichen besteht, ist zweckmäßigerweise die Schmelzflussrate des Polyethylens der Filamente der zweiten Lage größer als die Schmelzflussrate des Polyethylens der Filamente der ersten Lage.

Erfindungsgemäß ist vorgesehen, dass die zumindest eine weitere bzw. die zweite Komponente der Filamente der zweiten Lage aus einem Kunststoff besteht bzw. im Wesentlichen besteht, der einen höheren Schmelzpunkt aufweist als das Polyethylen der ersten Komponente der Filamente der zweiten Lage. Eine besonders bevorzugte Ausführungsform der Erfindung ist dadurch gekennzeichnet, dass die zumindest eine weitere bzw. die zweite Komponente der Filamente der zweiten Lage aus Polypropylen und/oder aus Polypropylen-Copolymer besteht bzw. im Wesentlichen besteht. Grundsätzlich kann diese Komponente auch aus zumindest einem Polyester und/oder Polyester-Copolymer bestehen bzw. im Wesentlichen bestehen. Dazu können vorzugsweise die weiter oben zur zweiten Komponente der Filamente der ersten Lage angegebenen Polyester bzw. Polyester-Copolymere verwendet werden.

Wenn nach bevorzugter Ausführungsform für die weitere bzw. zweite Komponente der Filamente der zweiten Lage Polypropylen eingesetzt wird, so beträgt die Schmelzflussrate (MFR) dieses Polypropylens der zweiten Komponente der zweiten Lage vorzugsweise mehr als 25 g/10 min und insbesondere mehr als 50 g/10 min. - Es liegt im Rahmen der Erfindung, dass die Multikomponentenfilamente bzw. die Bikomponentenfilamente der zweiten Lage eine exzentrische Kern-Mantel-Konfiguration oder eine Seite-an-Seite-Konfiguration aufweisen. Besonders bevorzugt ist dabei eine exzentrische Kern-Mantel-Konfiguration dieser Filamente. Eine ganz besonders empfohlene Ausführungsform der Erfindung zeichnet sich dadurch aus, dass die Multikomponentenfilamente bzw. die Bikomponentenfilamente der zweiten Lage eine exzentrische Kern-Mantel-Konfiguration aufweisen und dass der Mantel der Filamente über zumindest 20 %, insbesondere über zumindest 30 %, vorzugsweise über zumindest 40 %, bevorzugt über zumindest 50 %, sehr bevorzugt über zumindest 60 % und besonders bevorzugt über zumindest 65 % des Filamentumfanges eine konstante Dicke d bzw. eine im Wesentlichen konstante Dicke d aufweist.

Der Erfindung liegt die Erkenntnis zugrunde, dass die zweite Lage (Deckschicht bzw. Decklage) des erfindungsgemäßen Spinnvlieslaminates insbesondere für die homogenen Oberflächeneigenschaften des Laminates verantwortlich ist. Die erfindungsgemäßen Merkmale dieser zweiten Lage bedingen eine hohe Weichheit und eine ausreichende Festigkeit sowie eine geschlossene Oberfläche. Besonders bevorzugt bildet diese zweite Lage (Deckschicht) bei Einsatz des erfindungsgemäßen Spinnvlieslaminates in einem Produkt die äußere Oberfläche des Produktes. Diese zweite Lage bzw. Oberflächenlage genügt in ästhetischer Hinsicht allen Anforderungen und trägt dazu bei, dass das Spinnvlieslaminat eine hervorragende Opazität aufweist. Insbesondere die die Deckschicht bildende zweite Lage weist sehr homogene Oberflächeneigenschaften ohne Defektstellen und vor allem ohne störende Agglomerate auf.

Nach einer besonders bevorzugten Ausführungsform der Erfindung sind die erste Lage und die zweite Lage des erfindungsgemäßen Spinnvlieslaminates unmittelbar und ohne Zwischenschaltung weiterer Lagen bzw. Schichten aufeinander angeordnet. Gemäß einer anderen Ausführungsform können zwischen der ersten und der zweiten Lage aber auch weitere Schichten bzw. Lagen, beispielsweise weitere Spunbond-Vlieslagen und/oder Meltblown-Vlieslagen zwischengeschaltet sein.

Gemäß einer empfohlenen Ausführungsform der Erfindung ist das Flächengewicht der zweiten Lage geringer als das Flächengewicht der ersten Lage. Vorzugsweise ist das Flächengewicht der ersten Lage zumindest um einen Faktor 1,1, insbesondere zumindest um einen Faktor 1,2 und bevorzugt zumindest um einen Faktor 1,25 größer als das Flächengewicht der zweiten Lage. Es liegt im Rahmen der Erfindung, dass das Flächengewicht des (gesamten) Spinnvlieslaminates geringer ist als 40 g/m².

Eine besonders bevorzugte Ausführungsform der Erfindung ist dadurch gekennzeichnet, dass die Festigkeit des Spinnvlieslaminates in Maschinenrichtung (MD) größer als 25 N/5 cm ist. Zweckmäßigerweise beträgt die Dicke des Spinnvlieslaminates mehr als 0,50 mm, insbesondere mehr als 0,53 mm, vorzugsweise mehr als 0,55 mm und besonders bevorzugt mehr als 0,58 mm.

Die vorstehend angegebenen Werte der Festigkeit und der Dicke gelten insbesondere für Spinnvlieslaminate mit einem Flächengewicht von 12 bis 50 g/m², vorzugweise von 20 bis 30 g/m².

Erfindungsgemäß werden die zumindest zwei Lagen des erfindungsgemäßen Spinnvlieslaminates als Spunbond-Vlieslagen hergestellt. Es liegt dabei im Rahmen der Erfindung, dass jede der zumindest zwei Vlieslagen mit einer Spunbond-Vorrichtung bzw. mit einem Spunbond-Balken erzeugt wird. Insoweit ist zur Erzeugung des erfindungsgemäßen Spinnvlieslaminates zumindest eine Zwei-Balken-Anlage mit zwei Spunbond-Vorrichtungen erforderlich. Es liegt im Rahmen der Erfindung, dass jede Spunbond-Vorrichtung eine Spinneinrichtung bzw. Spinndüse aufweist sowie eine der Spinneinrichtung nachgeschaltete Kühlvorrichtung und zumindest eine der Kühlvorrichtung nachgeschaltete Verstreckeinrichtung. Vorzugsweise ist zumindest ein der Verstreckeinrichtung nachgeschalteter Diffusor vorgesehen. Eine ganz besonders empfohlene Ausführungsform der Erfindung zeichnet sich dadurch aus, dass das Aggregat aus der Kühlvorrichtung und der Verstreckeinrichtung als geschlossenes Aggregat ausgebildet ist und dass außer der Zufuhr von Kühlluft in die Kühlvorrichtung keine weitere Luftzufuhr von außen in dieses Aggregat stattfindet. Die den Diffusor bzw. den in Strömungsrichtung der Filamente letzten Diffusor verlassenden Endlosfilamente werden zweckmäßigerweise auf einem Ablageförderer bzw. insbesondere auf einem Ablagesiebband abgelegt. Auf dem Ablageförderer bzw. auf dem Ablagesiebband erfolgt dann vorzugsweise die Vorverfestigung jeder Vlieslage bzw. Spunbond-Vlieslage.

Eine besonders empfohlene Ausführungsform der Erfindung ist dadurch gekennzeichnet, dass zumindest eine der beiden Lagen des Spinnvlieslaminates mit Heißluft vorverfestigt wird und insbesondere lediglich mit Heißluft vorverfestigt wird. Ganz besonders bewährt hat sich im Rahmen der Erfindung eine Ausführungsform, bei der die zumindest zwei Lagen des erfindungsgemäßen Spinnvlieslaminates mit Heißluft vorverfestigt werden bzw. beide Lagen lediglich mit Heißluft vorverfestigt werden. Es liegt weiterhin im Rahmen der Erfindung, dass die Endverfestigung des Spinnvlieslaminates mit Heißluft erfolgt und nach einer Ausführungsform der Erfindung lediglich mit Heißluft erfolgt. Bei dem Spinnvlieslaminat handelt es sich dann um ein lediglich mit Heißluft vorverfestigtes und endverfestigtes Spinnvlieslaminat. Dieser Ausführungsform kommt im Rahmen der Erfindung besondere Bedeutung zu.

Eine bewährte Ausführungsform der Erfindung ist dadurch gekennzeichnet, dass zumindest eine Lage, vorzugsweise beide Lagen des erfindungsgemäßen Spinnvlieslaminates jeweils bei einer Temperatur unter 150 °C, insbesondere bei einer Temperatur unter 140 °C und bevorzugt bei einer Temperatur unter 135 °C vorverfestigt werden. Besonders bevorzugt ist im Rahmen der Erfindung, dass zumindest eine Lage, bevorzugt beide Lagen des Spinnvlieslaminates jeweils mit einem Heißluftmesser und/oder mit einem Heißluftofen vorverfestigt werden. Gemäß einer Ausführungsvariante bildet dabei das Heißluftmesser in Förderrichtung der Lage die erste Vorverfestigungseinrichtung und bildet dann der Heißluftofen in Förderrichtung der Lage die nachgeschaltete zweite Vorverfestigungseinrichtung. Grundsätzlich kann auch lediglich ein Heißluftmesser oder lediglich ein Heißluftofen zur Vorverfestigung einer Lage des Spinnvlieslaminates dienen. Es ist auch möglich, dass die erste Vorverfestigungseinrichtung durch den Heißluftofen gebildet wird und die zweite in Förderrichtung nachgeschaltete Vorverfestigungseinrichtung durch das Heißluftmesser gebildet wird. Zweckmäßigerweise wird das erfindungsgemäße Spinnvlies durch Heißluft endverfestigt und vorzugsweise in einem Heißluftofen endverfestigt.

Eine Ausführungsform, der im Rahmen der Erfindung ganz besondere Bedeutung zukommt, ist dadurch gekennzeichnet, dass die zweite Lage (Deckschicht) des erfindungsgemäßen Spinnvlieslaminates mittels einer Spunbond-Vorrichtung erzeugt und als erstes auf dem Ablageförderer bzw. auf dem Ablagesiebband abgelegt wird und dass danach die erste Lage mit einer Spunbond-Vorrichtung erzeugt wird und auf der bereits auf dem Ablageförderer bzw. auf dem Ablagesiebband abgelegten zweiten Lage (Deckschicht) aufgebracht wird. Es hat sich gezeigt, dass auf diese Weise besonders vorteilhafte Produkte bzw. Spinnvlieslaminate erhalten werden.

Zur Lösung des technischen Problems lehrt die Erfindung weiterhin ein Verfahren zur Erzeugung eines Spinnvlieslaminates mit einer Mehrzahl von übereinander angeordneten Spunbond-Vlieslagen, wobei zumindest zwei der Spunbond-Vlieslagen gekräuselte Endlosfilamente aufweisen bzw. aus gekräuselten Endlosfilamenten bestehen bzw. im Wesentlichen bestehen,
wobei eine erste Spunbond-Vlieslage mit gekräuselten Multikomponentenfilamenten bzw. Bikomponentenfilamenten erzeugt wird, wobei zumindest eine an der Außenoberfläche der Filamente der ersten Lage angeordnete erste Komponente aus aus Polyethylen besteht bzw. im Wesentlichen besteht, wobei zumindest eine weitere bzw. eine zweite Komponente der Filamente der ersten Lage aus einem Kunststoff besteht bzw. im Wesentlichen besteht, der einen höheren Schmelzpunkt aufweist als das Polyethylen der ersten Komponente der Filamente der ersten Lage,
wobei die erste Lage vorverfestigt wird, vorzugsweise mit Heißluft vorverfestigt wird, insbesondere lediglich mit Heißluft vorverfestigt wird,
wobei eine zweite äußerste Spunbond-Vlieslage mit Multikomponentenfilamenten bzw. Bikomponentenfilamenten, insbesondere mit gekräuselten Multikomponentenfilamenten bzw. Bikomponentenfilamenten als Deckschicht erzeugt wird, wobei zumindest eine erste an der Außenoberfläche der Filamente der zweiten Lage angeordnete Komponente aus Polyethylen besteht bzw. im Wesentlichen besteht, wobei zumindest eine weitere bzw. eine zweite Komponente der Filamente der zweiten Lage aus einem Kunststoff besteht bzw. im Wesentlichen besteht, der einen höheren Schmelzpunkt aufweist als das Polyethylen der ersten Komponente der Filamente der zweiten Lage,
wobei die zweite Spunbond-Vlieslage vorverfestigt wird, vorzugsweise mit Heißluft vorverfestigt wird, insbesondere lediglich mit Heißluft vorverfestigt wird,
wobei der Polyethylen-Anteil der ersten Komponente der Filamente der zweiten Lage höher ist als der Polyethylen-Anteil der ersten Komponente der Filamente der ersten Lage und wobei das Spinnvlieslaminat endverfestigt wird, vorzugsweise mit Heißluft endverfestigt wird, insbesondere lediglich mit Heißluft endverfestigt wird.

Eine besonders empfohlene Ausführungsform des erfindungsgemäßen Verfahrens ist dadurch gekennzeichnet, dass zunächst die zweite äußerste Spunbond-Vlieslage erzeugt wird bzw. auf einem Ablageförderer abgelegt wird und anschließend vorverfestigt wird, vorzugsweise mit Heißluft vorverfestigt wird und insbesondere lediglich mit Heißluft vorverfestigt wird
und wobei danach die erste Lage erzeugt wird und auf der bereits abgelegten zweiten Lage abgelegt wird, wobei die zweite Lage bzw. das Aggregat aus der ersten und zweiten Lage dann vorverfestigt wird, vorzugsweise mit Heißluft vorverfestigt wird und insbesondere lediglich mit Heißluft vorverfestigt wird und
wobei danach das Spinnvlieslaminat endverfestigt wird, vorzugsweise mit Heißluft endverfestigt wird und insbesondere lediglich mit Heißluft endverfestigt wird, und wobei der Titer der Filamente der zweiten äußeren Lage geringer ist als der Titer der Filamente der ersten Lage.

Nachfolgend wird die Erfindung anhand einer lediglich ein Ausführungsbeispiel darstellenden Zeichnung näher erläutert. Es zeigen in schematischer Darstellung:
- Fig. 1: einen Vertikalschnitt durch eine Vorrichtung zur Erzeugung einer Lage eines erfindungsgemäßen Spinnvlieslaminates,
- Fig. 2: einen Vertikalschnitt durch eine Zwei-Balken-Anlage mit zwei Spunbond-Vorrichtungen zur Erzeugung zweier Lagen eines erfindungsgemäßen Spinnvlieslaminates und
- Fig. 3: einen Schnitt durch ein erfindungsgemäßes Spinnvlieslaminat und
- Fig. 4: einen Schnitt durch ein bevorzugt im Rahmen der Erfindung eingesetztes Endlosfilament mit exzentrischer Kern-Mantel-Konfiguration.

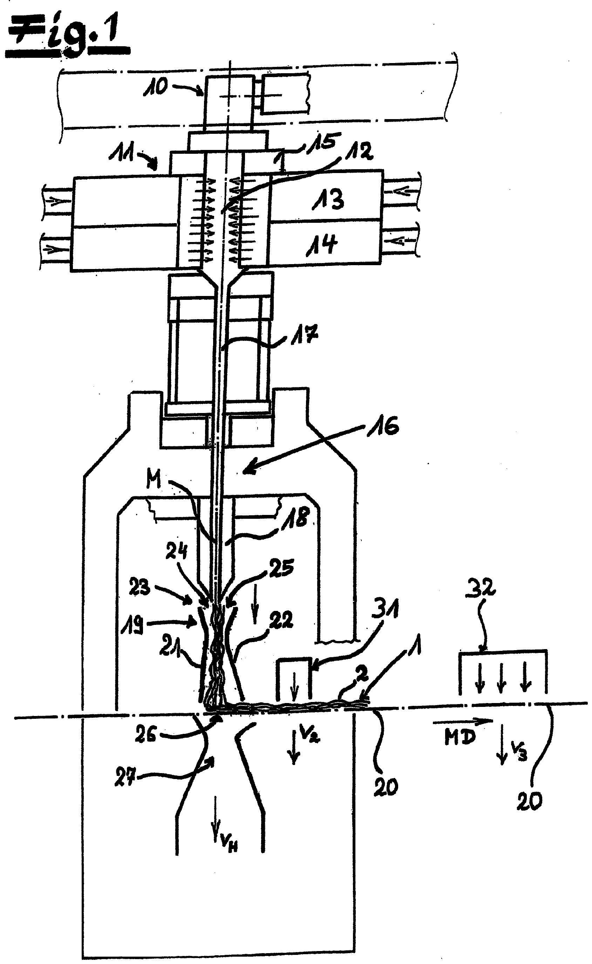

Die Fig. 1 zeigt eine Spunbond-Vorrichtung zur Erzeugung einer Spunbond-Vlieslage 2, 3 für ein erfindungsgemäßes Spinnvlieslaminat 1. Eine solche mit der Vorrichtung hergestellte Spunbond-Vlieslage 2, 3 weist gekräuselte Endlosfilamente F auf bzw. besteht aus gekräuselten Endlosfilamenten F bzw. im Wesentlichen aus gekräuselten Endlosfilamenten F. Es liegt im Rahmen der Erfindung, dass die Endlosfilamente F aus thermoplastischem Kunststoff bestehen.

Die in Fig. 1 dargestellte Vorrichtung umfasst eine Spinneinrichtung 10 zum Erspinnen der Endlosfilamente F und diese ersponnenen Endlosfilamente F werden zur Kühlung zweckmäßigerweise in eine Kühlvorrichtung 11 mit einer Kühlkammer 12 eingeführt. Bevorzugt und im Ausführungsbeispiel sind an zwei gegenüberliegenden Seiten der Kühlkammer 12 übereinander angeordnete Luftzufuhrkabinen 13, 14 angeordnet. Aus diesen übereinander angeordneten Luftzufuhrkabinen 13, 14 wird zweckmäßigerweise Luft unterschiedlicher Temperatur in die Kühlkammern eingeführt. Empfohlenermaßen und im Ausführungsbeispiel ist zwischen der Spinneinrichtung 10 und der Kühlvorrichtung 11 eine Monomer-Absaugungseinrichtung 15 angeordnet. Mit dieser Monomer-Absaugungseinrichtung 15 können beim Spinnprozess auftretende störende Gase aus der Vorrichtung entfernt werden. Bei diesen Gasen kann es sich beispielsweise um Monomere, Oligomere bzw. Zersetzungsprodukte und dergleichen Substanzen handeln.

Der Kühlvorrichtung 11 ist bevorzugt und im Ausführungsbeispiel in Filamentströmungsrichtung eine Verstreckeinrichtung 16 zum Verstrecken der Endlosfilamente F nachgeschaltet. Vorzugsweise und im Ausführungsbeispiel weist die Verstreckeinrichtung 16 einen Zwischenkanal 17 auf, der die Kühlvorrichtung 11 mit einem Verstreckschacht 18 der Verstreckeinrichtung 16 verbindet. Nach besonders bevorzugter Ausführungsform und im Ausführungsbeispiel ist das Aggregat aus der Kühlvorrichtung 11 und der Verstreckeinrichtung 16 bzw. das Aggregat aus der Kühlvorrichtung 11, dem Zwischenkanal 17 und dem Verstreckschacht 18 als geschlossenes Aggregat ausgebildet und außer der Zufuhr von Kühlluft in der Kühlvorrichtung 11 erfolgt keine weitere Luftzufuhr von außen in dieses Aggregat.

An die Verstreckeinrichtung 16 schließt bevorzugt und im Ausführungsbeispiel in Filamentströmungsrichtung ein Diffusor 19 an, durch den die Endlosfilamente F geführt werden. Nach Durchlaufen des Diffusors 19 werden die Endlosfilamente F vorzugsweise und im Ausführungsbeispiel auf einem als Ablagesiebband 20 ausgebildeten Ablageförderer abgelegt. Das Ablagesiebband 20 ist bevorzugt und im Ausführungsbeispiel als endlos umlaufendes Ablagesiebband 20 ausgebildet. Zweckmäßigerweise ist das Ablagesiebband 20 luftdurchlässig ausgeführt, sodass eine Absaugung von Prozessluft von unten durch das Ablagesiebband 20 erfolgen kann.

Vorzugsweise und im Ausführungsbeispiel weist der Diffusor 19 zwei untere divergierende Diffusorwandabschnitte 21, 22 auf. Diese divergierenden Diffusorwandabschnitte 21, 22 sind zweckmäßigerweise bezüglich der Mittelebene M der Vorrichtung bzw. des Diffusors 19 asymmetrisch ausgebildet. Empfohlenermaßen und im Ausführungsbeispiel bildet der einlaufseitige Diffusorwandabschnitt 21 einen geringeren Winkel β mit der Mittelebene M aus als der auslaufseitige Diffusorwandabschnitt 22. Dabei ist der Winkel β, den der einlaufseitige Diffusorwandabschnitt 21 mit der Mittelebene M bildet, empfohlenermaßen mindestens 1 ° kleiner als der Winkel β, den der auslaufseitige Diffusorwandabschnitt 22 mit der Mittelebene M einschließt.

Es liegt im Rahmen der Erfindung, dass an dem Einströmende 23 des Diffusors 19 zwei gegenüberliegende Sekundärlufteintrittsspalte 24, 25 vorgesehen sind, die jeweils einer der beiden gegenüberliegenden Diffusorwände zugeordnet sind. Vorzugsweise ist durch den in Bezug auf die Förderrichtung des Ablagesiebbandes 20 einlaufseitigen Sekundärlufteintrittsspalt 24 ein geringerer Sekundärluftvolumenstrom einführbar als durch den auslaufseitigen Sekundärlufteintrittsspalt 25. Dabei empfiehlt es sich, dass der Sekundärluftvolumenstrom des einlaufseitigen Sekundärlufteintrittsspaltes 24 um mindestens 5 %, bevorzugt um mindestens 10% und insbesondere um mindestens 15% geringer ist als der Sekundärluftvolumenstrom durch den auslaufseitigen Sekundärlufteintrittsspalt 25.

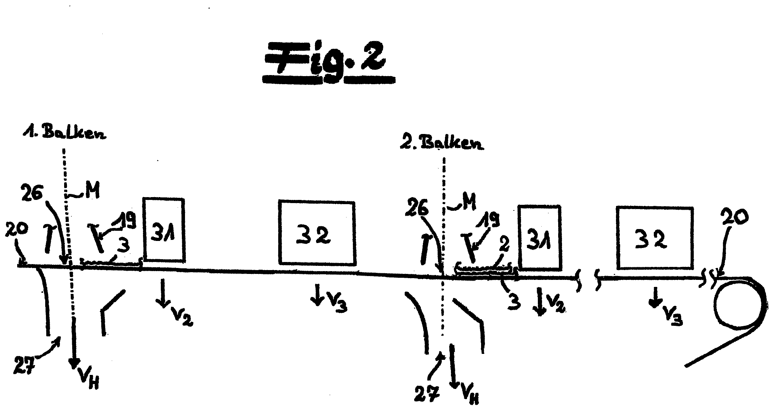

Die Fig. 2 zeigt eine Zwei-Balken-Anlage mit zwei Spunbond-Vorrichtungen entsprechend Fig. 1 zur Erzeugung von zwei Spunbond-Vlieslagen 2, 3 eines erfindungsgemäßen Spinnvlieslaminates 1. Der Einfachheit halber wurden in der Fig. 2 die Vorrichtungskomponenten der Spunbond-Vorrichtung jeweils nicht vollständig dargestellt, sondern lediglich der untere Bereich des jeweiligen Diffusors 19. Nach besonders bevorzugter Ausführungsform und im Ausführungsbeispiel werden mit der linken ersten Spunbond-Vorrichtung der Zwei-Balken-Anlage zunächst Endlosfilamente F ersponnen und zur zweiten Spunbond-Vlieslage 3 (Deckschicht) abgelegt. Mit der in Förderrichtung des Ablagesiebbandes 20 nachgeschalteten Spunbond-Vorrichtung rechts in der Fig. 2 werden dann Endlosfilamente F für die erste Spunbond-Vlieslage 2 ersponnen und auf dem Ablagesiebband 20 bzw. auf der zweiten Spunbond-Vlieslage 3 abgelegt. Diese Reihenfolge der Erzeugung der Spunbond-Vlieslagen 2, 3 ist im Rahmen der Erfindung besonders empfohlen.

Unterhalb des Ablagebereiches 26 für die Endlosfilamente F jeder Spunbond-Vorrichtung findet eine Absaugung von Prozessluft durch das Ablagesiebband 20 in einem Hauptabsaugbereich 27 statt, und zwar mit einer Absauggeschwindigkeit v_{H}. - Die mit der in Fig. 2 links dargestellten ersten Spunbond-Vorrichtung erzeugte Vlieslage 2, 3 - vorzugsweise und im Ausführungsbeispiel die zweite Lage 3 - wird empfohlenermaßen mit dem Ablagesiebband 20 Heißluft-Vorverfestigungseinrichtungen zugeführt. Bevorzugt und im Ausführungsbeispiel wird diese zweite Lage 3 zunächst mit einem Heißluftmesser 31 vorverfestigt und dann vorzugsweise mit einem in Maschinenrichtung (MD) nachgeschalteten Heißluftofen 32 weiter vorverfestigt. Empfohlenermaßen und im Ausführungsbeispiel erfolgt sowohl unterhalb des Heißluftmessers 31 als auch unterhalb des Heißluftofens 32 eine Absaugung von Prozessluft durch das Ablagesiebband 20, und zwar im Falle des Heißluftmessers 31 mit einer Absauggeschwindigkeit v₂ und im Falle des Heißluftofens mit einer Absauggeschwindigkeit v₃. Für die Absauggeschwindigkeiten gilt vorzugsweise, dass die Absauggeschwindigkeit v_{H} im Hauptabsaugbereich 27 am größten ist und die Absauggeschwindigkeit v₂ unter dem Heißluftmesser 31 am zweitgrößten ist und dass die Absauggeschwindigkeit v₃ unter dem Heißluftofen 32 am drittgrößten ist. Somit nimmt die Absauggeschwindigkeit v von dem Ablagebereich 26 der Filamente F bis zu dem Heißluftofen 32 hin ab. Bevorzugt erfolgt mit dem Heißluftmesser 31 (in Fig. 2 links) eine Heißluft-Vorverfestigung der zweiten Lage 3 bei einer Heißlufttemperatur von 80 °C bis 250 °C, vorzugsweise bei 120 °C bis 190 °C. Die Heißluft-Vorverfestigung in dem nachgeschalteten Heißluftofen 32 erfolgt zweckmäßigerweise bei einer Heißlufttemperatur von 110 °C bis 180 °C, bevorzugt von 120 °C bis 160 °C. Mit dem Heißluftmesser 31 (in Fig. 2 links) wird bevorzugt und im Ausführungsbeispiel Heißluft mit höherer Geschwindigkeit zugeführt als die Heißluft des nachgeschalteten Heißluftofens 32. So weist die Geschwindigkeit der zugeführten Heißluft bei dem Heißluftmesser 31 vorzugsweise eine Geschwindigkeit auf, die um zumindest einen Faktor 1,5, vorzugsweise um einen Faktor 1,8 größer ist als die Geschwindigkeit der Heißluft in dem Heißluftofen 32. Empfohlenermaßen und im Ausführungsbeispiel ist fernerhin der Breitenbereich in Maschinenrichtung (MD), in dem eine Beaufschlagung mit Heißluft erfolgt, bei dem ersten (in Fig. 2 linken) Heißluftmesser 31 schmaler als bei dem ersten (in Fig. 2 linken) Heißluftofen 32. So ist der Breitenbereich der Heißluftbeaufschlagung in Maschinenrichtung (MD) bei dem Heißluftofen 32 um mindestens einen Faktor 1,5 größer als bei dem Heißluftmesser 31.

Mit der in Fig. 2 dargestellten rechten zweiten Spunbond-Vorrichtung wird eine weitere Spunbond-Vlieslage 2, 3 - vorzugsweise und im Ausführungsbeispiel die erste Lage 2 - für das Spinnvlieslaminat 1 erzeugt. Diese erste Lage 2 wird empfohlenermaßen und im Ausführungsbeispiel auf der bereits von dem Ablagesiebband 20 transportierten zweiten Spunbond-Vlieslage 3 abgelegt. Anschließend wird bevorzugt und im Ausführungsbeispiel das Aggregat aus beiden Lagen 2, 3 vorverfestigt, und zwar empfohlenermaßen und im Ausführungsbeispiel mit Heißluft vorverfestigt. Dazu ist auch der zweiten Spunbond-Vorrichtung in Maschinenrichtung (MD) zunächst ein Heißluftmesser 31 nachgeschaltet und dem Heißluftmesser 31 ist wiederum ein Heißluftofen 32 nachgeschaltet. Auch bei der zweiten Spunbond-Vorrichtung und bei den genannten Heißluft-Vorverfestigungseinrichtungen der zweiten Spunbond-Vorrichtung erfolgen zweckmäßigerweise die zu der ersten Spunbond-Vorrichtung erläuterten Absaugungen mit den entsprechenden Absauggeschwindigkeiten. Auch die dort für die Heißluft-Vorverfestigungseinrichtungen genannten Parameter, insbesondere Temperaturen und Breitenbereichsparameter gelten auch für das Heißluftmesser 31 und für den Heißluftofen 32 hinter der zweiten Spunbond-Vorrichtung. - Im Ausführungsbeispiel nach Fig. 2 werden beide Lagen 2, 3 des erfindungsgemäßen Spinnvlieslaminates 1 lediglich mit Heißluft vorverfestigt.

Es liegt im Rahmen der Erfindung, dass das vorverfestigte Aggregat aus den beiden Lagen 2, 3 anschließend endverfestigt wird, und zwar vorzugsweise mittels Heißluft endverfestigt wird. Dazu wird zweckmäßigerweise ein in den Figuren nicht näher dargestellter Heißluftofen verwendet. Nach einer Ausführungsform der Erfindung werden die Lagen bzw. die beiden Lagen 2, 3 des Spinnvlieslaminates 1 sowohl mit Heißluft vorverfestigt bzw. lediglich mit Heißluft vorverfestigt als auch mit Heißluft endverfestigt bzw. lediglich mit Heißluft endverfestigt.

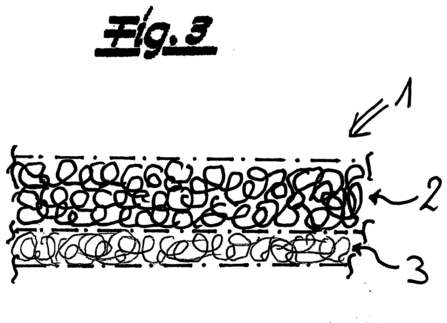

In der Fig. 3 ist schematisch ein Schnitt durch eine erfindungsgemäßes Spinnvlieslaminat 1 mit den beiden Lagen 2 und 3 gezeigt.

In der Fig. 4 sind Bikomponentenfilamente mit exzentrischer Kern-Mantel-Konfiguration dargestellt, die für die Lagen 2, 3 des erfindungsgemäßen Spinnvlieslaminates 1 ganz besonders bevorzugt werden. Nach einer Ausführungsform der Erfindung bestehen beide Lagen 2, 3 des Spinnvlieslaminates 1 aus solchen Bikomponentenfilamenten mit exzentrischer Kern-Mantel-Konfiguration. Fig. 4 zeigt einen Querschnitt durch ein Endlosfilament F mit der bevorzugten speziellen Kern-Mantel-Konfiguration. Bei diesen Endlosfilamenten F weist der Mantel 37 im Filamentquerschnitt vorzugsweise und im Ausführungsbeispiel über mehr als 50 %, bevorzugt über mehr als 55 % des Filamentumfanges eine konstante Dicke d auf. Bevorzugt und im Ausführungsbeispiel nimmt der Kern 4 der Filamente F mehr als 65 % der Fläche des Filamentquerschnittes der Filamente F ein. Empfohlenermaßen und im Ausführungsbeispiel ist der Kern 4 - im Filamentquerschnitt gesehen - kreissegmentförmig ausgebildet. Zweckmäßigerweise und im Ausführungsbeispiel weist dieser Kern 4 bezüglich seines Umfanges einen kreisbogenförmigen Umfangsabschnitt 5 sowie einen linearen Umfangsabschnitt 6 auf. Bevorzugt und im Ausführungsbeispiel nimmt der kreisbogenförmige Umfangsabschnitt des Kerns 4 über 50 %, bevorzugt über 55 % des Umfanges des Kerns 4 ein. Zweckmäßigerweise und im Ausführungsbeispiel ist der Mantel 37 der Filamente F - im Filamentquerschnitt gesehen - außerhalb des Mantelbereiches mit konstanter Dicke d kreissegmentförmig ausgebildet. Dieses Kreissegment 7 des Mantels 37 weist empfohlenermaßen und im Ausführungsbeispiel bezüglich seines Umfanges einen kreisbogenförmigen Umfangsabschnitt 8 sowie einen linearen Umfangsabschnitt 9 auf. Vorzugsweise beträgt die Dicke d bzw. die mittlere Dicke d des Mantels 37 im Bereich seiner konstanten Dicke 0,5 % bis 8%, insbesondere 2 % bis 10 % des Filamentdurchmessers D. Vorzugsweise beträgt die Dicke d bzw. die mittlere Dicke d des Mantels 0,1 µm bis 3 µm. - Die Fig. 4 zeigt weiterhin den Abstand a des Flächenschwerpunktes des Kerns 4 von dem Flächenschwerpunkt des Mantels 3 des Endlosfilamentes 2. Der Abstand a der Flächenschwerpunkte des Kerns 4 von dem Flächenschwerpunkt des Mantels 3 beträgt bei den hier vorliegenden Filamenten F vorzugsweise 5 % bis 40 % des Filamentdurchmessers D bzw. des größten Filamentdurchmessers D.

## Patentansprüche

1. Spinnvlieslaminat (1) mit einer Mehrzahl von übereinander angeordneten Spunbond-Vlieslagen (2, 3), wobei zumindest zwei der Spunbond-Vlieslagen (2) gekräuselte Endlosfilamente (F) aufweisen bzw. aus gekräuselten Endlosfilamenten (F) bestehen bzw. im Wesentlichen bestehen,
wobei eine erste Spunbond-Vlieslage (2) mit gekräuselten Multikomponentenfilamenten bzw. Bikomponentenfilamenten vorgesehen ist, wobei zumindest eine an der Außenoberfläche der Filamente (F) der ersten Lage (2) angeordnete erste Komponente aus Polyethylen besteht bzw. im Wesentlichen besteht, wobei zumindest eine weitere bzw. eine zweite Komponente der Filamente (F) der ersten Lage (2) aus einem Kunststoff besteht bzw. im Wesentlichen besteht, der einen höheren Schmelzpunkt aufweist als das Polyethylen der ersten Komponente der Filamente (F) der ersten Lage (2),
wobei das Spinnvlieslaminat (1) eine zweite äußerste Spunbond-Vlieslage (3) mit Multikomponentenfilamenten bzw. Bikomponentenfilamenten als Deckschicht aufweist, wobei zumindest eine erste an der Außenoberfläche der Filamente (F) der zweiten Lage (3) angeordnete Komponente aus Polyethylen besteht bzw. im Wesentlichen besteht, wobei zumindest eine weitere bzw. eine zweite Komponente der Filamente (F) der zweiten Lage (3) aus einem Kunststoff besteht bzw. im Wesentlichen besteht, der einen höheren Schmelzpunkt aufweist als das Polyethylen der ersten Komponente der Filamente (F) der zweiten Lage (3),
und wobei der Polyethylen-Anteil der ersten Komponente der Filamente (F) der zweiten Lage (3) höher ist als der Polyethylen-Anteil der ersten Komponente der Filamente (F) der ersten Lage (2)
und wobei der Titer der Filamente (F) der zweiten äußersten Lage (3) geringer ist als der Titer der Filamente (F) der ersten Lage (2).

2. Spinnvlieslaminat nach Anspruch 1, wobei die zumindest eine weitere bzw. zweite Komponente der Filamente (F) der ersten Lage (2) aus Polypropylen oder aus einem Polyester besteht bzw. im Wesentlichen besteht.

3. Spinnvlieslaminat nach einem der Ansprüche 1 oder 2, wobei der Polyethylen-Anteil der Filamente (F) der ersten Lage (2) weniger als 40 Gew.-%, insbesondere weniger als 38 Gew.-% und bevorzugt weniger als 35 Gew.-% beträgt.

4. Spinnvlieslaminat nach einem der Ansprüche 1 bis 3, wobei die Filamente (F) der ersten Lage (2) einen Titer von mehr als 1,5 den, vorzugsweise von mehr als 1,6 den und bevorzugt von mehr als 1,7 den aufweisen und wobei die Filamente (F) der ersten Lage (2) gemäß empfohlener Ausführungsform einen Titer von 1,5 den bis 2,5 den, insbesondere von 1,6 den bis 2,4 den, vorzugsweise von 1,7 den bis 2,3 den, sehr bevorzugt von 1,8 den bis 2,2 den und besonders bevorzugt von 2,0 den bis 2,2 den aufweisen.

5. Spinnvlieslaminat nach einem der Ansprüche 1 bis 4, wobei die Multikomponentenfilamente bzw. Bikomponentenfilamente der ersten Lage (2) eine exzentrische Kern-Mantel-Konfiguration aufweisen.

6. Spinnvlieslaminat nach Anspruch 5, wobei der Mantel der Filamente (F) der ersten Lage (2) mit exzentrischer Kern-Mantel-Konfiguration über zumindest 20 %, insbesondere über zumindest 30 %, vorzugsweise über zumindest 40 % und bevorzugt über zumindest 50 % des Filamentumfanges eine konstante Dicke d bzw. eine im Wesentlichen konstante Dicke d aufweist.

7. Spinnvlieslaminat nach einem der Ansprüche 1 bis 6, wobei die Schmelzflussrate (MFR) des Polyethylens der ersten Komponente der Filamente (F) der ersten Lage (2) kleiner ist als 35g/10min, insbesondere kleiner ist als 30 g/10 min, vorzugsweise kleiner ist als 25 g/10 min und sehr bevorzugt kleiner ist als 20 g/10 min.

8. Spinnvlieslaminat nach einem der Ansprüche 1 bis 7, wobei die weitere bzw. zweite Komponente der Filamente (F) der ersten Lage (2) aus Polypropylen besteht bzw. im Wesentlichen besteht und wobei das Polypropylen eine Schmelzflussrate (MFR) von mehr als 25 g/10 min, insbesondere von mehr als 35 g/10 min, vorzugsweise von mehr als 45 g/10 min, bevorzugt von mehr als 55 g/10 min und besonders bevorzugt von mehr als 65 g/10 min aufweist.

9. Spinnvlieslaminat nach einem der Ansprüche 1 bis 8, wobei die Multikomponentenfilamente bzw. Bikomponentenfilamente der zweiten Spunbond-Vlieslage (3) gekräuselte Filamente (F) sind.

10. Spinnvlieslaminat nach einem der Ansprüche 1 bis 9, wobei die zumindest eine weitere bzw. zweite Komponente der Filamente (F) der zweiten Lage (3) aus Polypropylen besteht bzw. im Wesentlichen besteht.

11. Spinnvlieslaminat nach einem der Ansprüche 1 bis 10, wobei der Polyethylen-Anteil der Filamente der zweiten Lage (3) mehr als 33 Gew.-%, vorzugsweise mehr als 35 Gew.-% und bevorzugt mehr als 38 Gew.-% beträgt und wobei der Polyethylen-Anteil vorzugsweise 40 Gew.-% bis 65 Gew.-% und bevorzugt 40 Gew.-% bis 60 Gew.-% beträgt.

12. Spinnvlieslaminat nach einem der Ansprüche 1 bis 11, wobei die Filamente (F) der zweiten Lage (3) einen Titer von weniger als 1,7 den, insbesondere von weniger als 1,6 den und nach einer empfohlenen Ausführungsform einen Titer von 0,8 den bis 1,6 den, insbesondere von 0,9 den bis 1,5 den und bevorzugt von 1,0 den bis 1,3 den aufweisen.

13. Spinnvlieslaminat nach einem der Ansprüche 1 bis 12, wobei die Multikomponentenfilamente bzw. die Bikomponentenfilamente der zweiten Lage (3) eine exzentrische Kern-Mantel-Konfiguration oder eine Seite-an-Seite-Konfiguration aufweisen.

14. Spinnvlieslaminat nach einem der Ansprüche 1 bis 13, wobei die Multikomponentenfilamente bzw. die Bikomponentenfilamente der zweiten Lage (3) eine exzentrische Kern-Mantel-Konfiguration aufweisen und wobei der Mantel der Filamente (F) über zumindest 20 %, insbesondere über zumindest 30 %, vorzugsweise über zumindest 40 % und bevorzugt über zumindest 50 % des Filamentumfanges eine konstante Dicke d bzw. eine im Wesentlichen konstante Dicke d aufweist.

15. Spinnvlieslaminat nach einem der Ansprüche 1 bis 14, wobei die Schmelzflussrate (MFR) des Polyethylens der ersten Komponente der Filamente (F) der zweiten Lage (3) größer ist als 15 g/10 min, insbesondere größer ist als 20 g/10 min und bevorzugt größer ist als 27 g/10 min.

16. Spinnvlieslaminat nach einem der Ansprüche 10 bis 15, wobei die Schmelzflussrate (MFR) des Polypropylens der zweiten Komponente der zweiten Lage (3) mehr als 25 g/10 min, insbesondere mehr als 60 g/10 min beträgt.

17. Spinnvlieslaminat nach einem der Ansprüche 1 bis 16, wobei der Kräuselungsgrad der Filamente (F) der zweiten Lage (3) gleich oder kleiner ist als der Kräuselungsgrad der Filamente (F) der ersten Lage (2).

18. Spinnvlieslaminat nach einem der Ansprüche 1 bis 17, wobei das Flächengewicht der zweiten Lage (3) geringer ist als das Flächengewicht der ersten Lage (2) und wobei vorzugsweise das Flächengewicht der ersten Lage (2) zumindest um einen Faktor 1,2, insbesondere zumindest um einen Faktor 1,3 und bevorzugt zumindest um einen Faktor 1,4 größer ist als das Flächengewicht der zweiten Lage (3).

19. Spinnvlieslaminat nach einem der Ansprüche 1 bis 18, wobei das Flächengewicht des Spinnvlieslaminates (1) geringer ist als 30 g/m².

20. Spinnvlieslaminat nach einem der Ansprüche 1 bis 19, wobei die Festigkeit des Spinnvlieslaminates (1) in Maschinenrichtung (MD) größer als 25 N/5 cm ist, wobei das Spinnvlieslaminat (1) insbesondere ein Flächengewicht von 12 bis 50 g/m², vorzugsweise von 20 bis 30 g/m² aufweist.

21. Spinnvlieslaminat nach einem der Ansprüche 1 bis 20, wobei die Dicke des Spinnvlieslaminates (1) mehr als 0,50 mm, insbesondere mehr als 0,53 mm und vorzugsweise mehr als 0,55 mm beträgt, wobei das Spinnvlieslaminat (1) insbesondere ein Flächengewicht von 12 bis 50 g/m², vorzugsweise von 20 bis 30 g/m² aufweist.

22. Spinnvlieslaminat nach einem der Ansprüche 1 bis 21, wobei der Unterschied zwischen dem Titer der Filamente (F) der ersten Lage (2) und dem Titer der Filamente (F) der zweiten Lage (3) wenigstens 0,2 den, bevorzugt mindestens 0,3 den und empfohlenermaßen maximal 1,1 den, bevorzugt maximal 1,0 den beträgt.

23. Verfahren zur Erzeugung eines Spinnvlieslaminates (1) mit einer Mehrzahl von übereinander angeordneten Spunbond-Vlieslagen (2, 3) - insbesondere nach einem der Ansprüche 1 bis 22 -, wobei zumindest zwei der Spunbond-Vlieslagen gekräuselte Endlosfilamente aufweisen bzw. aus gekräuselten Endlosfilamenten bestehen bzw. im Wesentlichen bestehen,
wobei eine erste Spunbond-Vlieslage (2) mit gekräuselten Multikomponentenfilamenten bzw. Bikomponentenfilamenten erzeugt wird, wobei zumindest eine an der Außenoberfläche der Filamente (F) der ersten Lage (2) angeordnete erste Komponente aus Polyethylen besteht bzw. im Wesentlichen besteht, wobei zumindest eine weitere bzw. eine zweite Komponente der Filamente (F) der ersten Lage (2) aus einem Kunststoff besteht bzw. im Wesentlichen besteht, der einen höheren Schmelzpunkt aufweist als das Polyethylen der ersten Komponente der Filamente (F) der ersten Lage (2),
wobei die erste Lage vorverfestigt wird, vorzugsweise mit Heißluft vorverfestigt wird und insbesondere lediglich mit Heißluft vorverfestigt wird,
wobei eine zweite äußerste Spunbond-Vlieslage (3) mit Multikomponentenfilamenten bzw. Bikomponentenfilamenten als Deckschicht erzeugt wird, wobei zumindest eine erste an der Außenoberfläche der Filamente (F) der zweiten Lage (3) angeordnete Komponente aus Polyethylen besteht bzw. im Wesentlichen besteht,
wobei zumindest eine weitere bzw. eine zweite Komponente der Filamente (F) der zweiten Lage (3) aus einem Kunststoff besteht bzw. im Wesentlichen besteht, der einen höheren Schmelzpunkt aufweist als das Polyethylen der ersten Komponente der Filamente (F) der zweiten Lage (3),
wobei die zweite Spunbond-Vlieslage (3) vorverfestigt wird, vorzugsweise mit Heißluft vorverfestigt wird und insbesondere lediglich mit Heißluft vorverfestigt wird,
wobei der Polyethylen-Anteil der ersten Komponente der Filamente (F) der zweiten Lage (3) höher ist als der Polyethylen-Anteil der ersten Komponente der Filamente (F) der ersten Lage (2),
wobei das Spinnvlieslaminat (1) endverfestigt wird, vorzugsweise mit Heißluft endverfestigt wird und insbesondere lediglich mit Heißluft endverfestigt wird,
und wobei der Titer der Filamente (F) der zweiten äußeren Lage (3) geringer ist als der Titer der Filamente (F) der ersten Lage (2).

24. Verfahren nach Anspruch 23, wobei zuerst die zweite Spunbond-Vlieslage (3) als Deckschicht erzeugt wird und vorverfestigt wird und wobei danach die erste Spunbond-Vlieslage (2) erzeugt wird bzw. auf der zweiten Spunbond-Vlieslage (3) erzeugt wird und anschließend vorverfestigt wird.

25. Verfahren nach einem der Ansprüche 23 oder 24, wobei gekräuselte Multikomponentenfilamente bzw. Bikomponentenfilamente für die zweite Spunbond-Vlieslage (3) erzeugt werden.

## Claims

1. A spunbond nonwoven laminate (1) comprising a plurality of spunbond nonwoven layers (2, 3) arranged one above the other, wherein at least two of the spunbond nonwoven layers (2) comprise crimped continuous filaments (F) or consist or substantially consist of crimped continuous filaments (F),
wherein a first spunbond nonwoven layer (2) with crimped multicomponent filaments or bicomponent filaments is provided, wherein at least one first component arranged on the outer surface of the filaments (F) of the first layer (2) consists or substantially consists of polyethylene, wherein at least one further or one second component of the filaments (F) of the first layer (2) consists or substantially consists of a plastic which has a higher melting point than the polyethylene of the first component of the filaments (F) of the first layer (2),
wherein the spunbond nonwoven laminate (1) comprises a second outermost spunbond nonwoven layer (3) comprising multicomponent filaments or bicomponent filaments as a cover layer, wherein at least one first component arranged on the outer surface of the filaments (F) of the second layer (3) consists or substantially consists of polyethylene, wherein at least one further or one second component of the filaments (F) of the second layer (3) consists or substantially consists of a plastic which has a higher melting point than the polyethylene of the first component of the filaments (F) of the second layer (3),
and wherein the polyethylene fraction of the first component of the filaments (F) of the second layer (3) is higher than the polyethylene fraction of the first component of the filaments (F) of the first layer (2)
and wherein the titre of the filaments (F) of the second outermost layer (3) is less than the titre of the filaments (F) of the first layer (2).

2. The spunbond nonwoven laminate according to Claim 1, wherein at least one further or second component of the filaments (F) of the first layer (2) consists or substantially consists of polypropylene or of a polyester.

3. The spunbond nonwoven laminate according to one of Claims 1 or 2, wherein the polyolefin fraction of the filaments (F) of the first layer (2) is less than 40 wt.%, in particular less than 38 wt. % and preferably less than 35 wt. %.

4. The spunbond nonwoven laminate according to one of Claims 1 to 3, wherein the filaments (F) of the first layer (2) have a titre of more than 1.5 den, preferably of more than 1.6 den and preferably of more than 1.7 den, and wherein the filaments (F) of the first layer (2) according to the recommended embodiment have a titre of 1.5 den to 2.5 den, in particular of 1.6 den to 2.4 den, preferably of 1.7 den to 2.3 den, very preferably of 1.8 den to 2.2 den and particularly preferably of 2.0 den to 2.2 den.

5. The spunbond nonwoven laminate according to one of Claims 1 to 4, wherein the multicomponent filaments or bicomponent filaments of the first layer (2) have an eccentric core-sheath configuration.

6. The spunbond nonwoven laminate according to Claim 5, wherein the sheath of the filaments (F) of the first layer (2) having an eccentric core-sheath configuration has a constant thickness d or a substantially constant thickness d over at least 20 %, in particular over at least 30 %, preferably over at least 40 % and preferably over at least 50 % of the filament circumference.

7. The spunbond nonwoven laminate according to one of Claims 1 to 6, wherein the melt flow rate (MFR) of the polyethylene of the first component of the filaments (F) of the first layer (2) is less than 35 g/10 min, in particular less than 30 g/10 min, preferably less than 25 g/10 min and very preferably less than 20 g/10 min.

8. The spunbond nonwoven laminate according to one of Claims 1 to 7, wherein the further or second component of the filaments (F) of the first layer (2) consists or substantially consists of polypropylene and wherein the polypropylene has a melt flow rate (MFR) of more than 25 g/10 min, in particular of more than 35 g/10 min, preferably of more than 45 g/10 min, preferably of more than 55 g/10 min and particularly preferably of more than 65 g/10 min.

9. The spunbond nonwoven laminate according to one of Claims 1 to 8, wherein the multicomponent filaments or bicomponent filaments of the second spunbond nonwoven layer (3) comprise crimped filaments (F).

10. The spunbond nonwoven laminate according to one of Claims 1 to 9, wherein the at least one further or second component of the filaments (F) of the second layer (3) consists or substantially consists of polypropylene.

11. The spunbond nonwoven laminate according to one of Claims 1 to 10, wherein the polyethylene fraction of the filaments of the second layer (3) is more than 33 wt.%, preferably more than 35 wt.% and preferably more than 38 wt.% and wherein the polyethylene fraction is preferably 40 wt.% to 65 wt.% and preferably 40 wt.% to 60 wt.%.

12. The spunbond nonwoven laminate according to one of Claims 1 to 11, wherein the filaments (F) of the second layer (3) have a titre of less than 1.7 den, in particular of less than 1.6 den and according to a recommended embodiment a titre of 0.8 den to 1.6 den, in particular of 0.9 den to 1.5 den and preferably of 1.0 den to 1.3 den.

13. The spunbond nonwoven laminate according to one of Claims 1 to 12, wherein the multicomponent filaments or bicomponent filaments of the second layer (3) have an eccentric core-sheath configuration or a side-by-side configuration.

14. The spunbond nonwoven laminate according to one of Claims 1 to 13, wherein the multicomponent filaments or the bicomponent filaments of the second layer (3) have an eccentric core-sheath configuration and wherein the sheath of the filaments (F) has a constant thickness d or a substantially constant thickness d over at least 20 %, in particular over at least 30 %, preferably over at least 40 % and preferably over at least 50 % of the filament circumference.

15. The spunbond nonwoven laminate according to one of Claims 1 to 14, wherein the melt flow rate (MFR) of the polyethylene of the first component of the filaments (F) of the second layer (3) is greater than 15 g/10 min, in particular greater than 20 g/10 min and preferably greater than 27 g/10 min.

16. The spunbond nonwoven laminate according to one of Claims 10 to 15, wherein the melt flow rate (MFR) of the polypropylene of the second component of the second layer (3) is more than 25 g/10 min, in particular more than 60 g/10 min.

17. The spunbond nonwoven laminate according to one of Claims 1 to 16, wherein the degree of crimping of the filaments (F) of the second layer (3) is equal to or less than the degree of crimping of the filaments (F) of the first layer (2).

18. The spunbond nonwoven laminate according to one of Claims 1 to 17, wherein the weight per unit area of the second layer (3) is less than the weight per unit area of the first layer (2) and wherein preferably the weight per unit area of the first layer (2) is at least a factor of 1.2, in particular at least a factor of 1.3, and preferably at least a factor of 1.4 larger than the weight per unit area of the second layer (3).

19. The spunbond nonwoven laminate according to one of Claims 1 to 18, wherein the weight per unit area of the spunbond nonwoven laminate is less than 30 g/m².

20. The spunbond laminate according to one of Claims 1 to 19, wherein the strength of the spunbond nonwoven laminate (1) in the machine direction (MD) is greater than 25 N/5 cm, wherein the spunbond nonwoven laminate (1) in particular has a weight per unit area of 12 to 50 g/m², preferably of 20 to 30 g/m².

21. The spunbond laminate according to one of Claims 1 to 20, wherein the thickness of the spunbond nonwoven laminate (1) is more than 0.50 mm, in particular more than 0.53 mm and preferably more than 0.55 mm, wherein the spunbond nonwoven laminate (1) in particular has a weight per unit area of 12 to 50 g/m², preferably of 20 to 30 g/m².

22. The spunbond nonwoven laminate according to one of Claims 1 to 21, wherein the difference between the titre of the filaments (F) of the first layer (2) and the titre of the filaments (F) of the second layer (3) is at least 0.2 den, preferably at least 0.3 den and recommendably a maximum of 1.1 den, preferably a maximum of 1.0 den.

23. A method for producing a spunbond nonwoven laminate (1) comprising a plurality of spunbond nonwoven layers (2, 3) arranged one above the other, in particular according to one of Claims 1 to 22, wherein at least two of the spunbond nonwoven layers comprise crimped continuous filaments or consist or substantially consist of crimped continuous filaments,
wherein a first spunbond nonwoven layer (2) having crimped multicomponent filaments or bicomponent filaments is produced, wherein at least one first component arranged on the outer surface of the filaments (F) of the first layer (2) consists or substantially consists of polyethylene, wherein at least one further or a second component of the filaments (F) of the first layer (2) consists or substantially consists of a plastic having a higher melting point than the polyethylene of the first component of the filaments (F) of the first layer (2),
wherein the first layer is pre-consolidated, preferably pre-consolidated with hot air and in particular only pre-consolidated with hot air, wherein a second outermost spunbond nonwoven layer (3) having multicomponent filaments or bicomponent filaments as a cover layer is produced wherein at least a first component arranged on the outer surface of the filaments (F) of the second layer (3) consists or substantially consists of polyethylene,
wherein at least one further or one second component of the filaments (F) of the second layer (3) consists or substantially consists of a plastic which has a higher melting point than the polyethylene of the first component of the filaments (F) of the second layer (3),
wherein the second spunbond layer (3) is pre-consolidated, preferably pre-consolidated with hot air, and in particular only pre-consolidated with hot air,
wherein the polyethylene fraction of the first component of the filaments (F) of the second layer (3) is greater than the polyethylene fraction of the first component of the filaments (F) of the first layer (2),
wherein the spunbond laminate (1) is finally consolidated, preferably finally consolidated with hot air and in particular is only consolidated with hot air,
and wherein the titre of the filaments (F) of the second outer layer (3) is lower than the titre of the filaments (F) of the first layer (2).

24. The method according to claim 23, wherein firstly the second spunbond nonwoven layer (3) is produced as a cover layer and is pre-consolidated, and wherein then the first spunbond nonwoven layer (2) is produced or is produced on the second spunbond nonwoven layer (3) and is then pre-consolidated.

25. The method according to one of Claims 23 or 24, wherein crimped multicomponent filaments or bicomponent filaments are produced for the second spunbond nonwoven layer (3).

## Revendications

1. Laminé filé-lié (1), doté d'une multiplicité de couches de non-tissé filé-fondu (2, 3) superposées, au moins deux des couches de non-tissé filé-fondu (2) comportant des filaments continus (F) crêpés ou étant constituées ou majoritairement constituées de filaments continus (F) crêpés,
une première couche de non-tissé filé-fondu (2) dotée de filaments multicomposants ou. filaments bicomposants crêpés étant prévue, au moins une première composante placée sur la surface extérieure des filaments (F) de la première couche (2) étant constituée ou majoritairement constituée de polyéthylène, au moins une deuxième ou composante additionnelle des filaments (F) de la première couche (2) étant constituée ou majoritairement constituée d'une matière plastique, dont le point de fusion est supérieur à celui du polyéthylène de la première composante des filaments (F) de la première couche (2),
le laminé filé-lié (1) comportant en tant que couche de couverture une deuxième couche la plus extérieure de non-tissé filé-fondu (3), dotée de filaments multicomposants ou de filaments bicomposants, au moins une première composante placée sur la surface extérieure des filaments (F) de la deuxième couche (3) étant constituée ou majoritairement constituée de polyéthylène, une deuxième ou au moins une composante additionnelle des filaments (F) de la deuxième couche (3) étant constituée ou majoritairement constituée d'une matière plastique dont le point de fusion est supérieur à celui du polyéthylène de la première composante des filaments (F) de la deuxième couche (3),
et la part de polyéthylène de la première composante des filaments (F) de la deuxième couche (3) étant supérieure à la part de polyéthylène de la première composante des filaments (F) de la première couche (2),
et le titre des filaments (F) de la deuxième couche la plus extérieure (3) étant moins élevé que le titre des filaments (F) de la première couche (2).

2. Laminé filé-lié selon la revendication 1, la deuxième ou au moins une composante additionnelle des filaments (F) de la première couche (2) étant constituée ou majoritairement constituée de polypropylène ou d'un polyester.

3. Laminé filé-lié 1 ou 2, la part de polyéthylène des filaments (F) de la première couche (2) s'élevant à moins de 40 % en poids, notamment à moins de 38 % en poids et préférentiellement à moins de 35 % en poids.

4. Laminé filé-lié selon l'une quelconque des revendications 1 à 3, les filaments (F) de la première couche (2) présentant un titre de plus de 1,5 den, de préférence de plus de 1,6 den et préférentiellement de plus de 1,7 den et les filaments (F) de la première couche (2) présentant selon la forme de réalisation recommandée un titre de 1,5 den à 2,5 den, notamment de 1,6 den à 2,4 den, de préférence de 1,7 den à 2,3 den, de manière très préférentielle, de 1,8 den à 2,2 den et de manière particulièrement préférentielle, de 2,0 den à 2,2 den.

5. Laminé filé-lié selon l'une quelconque des revendications 1 à 4, les filaments multicomposants ou filaments bicomposants de la première couche (2) présentant une configuration âme-enveloppe excentrique.

6. Laminé filé-lié selon la revendication 5, l'enveloppe des filaments (F) de la première couche (2) dotés d'une configuration âme-enveloppe excentrique présentant une épaisseur d constante ou une épaisseur d sensiblement constante sur au moins 20 %, notamment sur au moins 30 %, de préférence sur au moins 40 % et préférentiellement sur au moins 50 % de la périphérie des filaments.

7. Laminé filé-lié selon l'une quelconque des revendications 1 à 6, la fluidité à l'état fondu (MFR) du polyéthylène de la première composante des filaments (F) de la première couche (2) étant inférieure à 35 g/10 mn, notamment inférieure à 30 g/10 mn, de préférence inférieure à 25 g/10 mn et de manière très préférentielle, inférieure à 20 g/10 mn.

8. Laminé filé-lié selon l'une quelconque des revendications 1 à 7, la deuxième ou composante additionnelle des filaments (F) de la première couche (2) étant constituée ou majoritairement constituée de polypropylène et le polypropylène présentant une fluidité à l'état fondu (MFR) supérieure à 25 g/10 mn, notamment supérieure à 35 g/10 mn, de préférence supérieure à 45 g/10 mn, préférentiellement supérieure à 55 g/10 mn et de manière particulièrement préférentielle, supérieure à 65 g/10 mn.

9. Laminé filé-lié selon l'une quelconque des revendications 1 à 8, les filaments multicomposants ou filaments bicomposants de la deuxième couche de non-tissé filé-fondu (3) étant des filaments (F) crêpés.

10. Laminé filé-lié selon l'une quelconque des revendications 1 à 9, la deuxième ou au moins une composante additionnelle des filaments (F) de la deuxième couche (3) étant constituée ou majoritairement constituée de polypropylène.

11. Laminé filé-lié selon l'une quelconque des revendications 1 à 10, la part de polyéthylène des filaments de la deuxième couche (3) s'élevant à plus de 33 % en poids, de préférence à plus de 35 % en poids et préférentiellement à plus de 38 % en poids et la part de polyéthylène s'élevant de préférence à de 40 % en poids à 65 % en poids et préférentiellement à de 40 % en poids à 60 % en poids.

12. Laminé filé-lié selon l'une quelconque des revendications 1 à 11, les filaments (F) de la deuxième couche (3) présentant un titre de moins de 1,7 den, notamment de moins de 1,6 den et selon une forme de réalisation recommandée, un titre de 0,8 den à 1,6 den, notamment de 0,9 den à 1,5 den et préférentiellement de 1,0 den à 1,3 den.

13. Laminé filé-lié selon l'une quelconque des revendications 1 à 12, les filaments multicomposants ou les filaments bicomposants de la deuxième couche (3) présentant une configuration âme-enveloppe excentrique ou une configuration côte à côte.

14. Laminé filé-lié selon l'une quelconque des revendications 1 à 13, les filaments multicomposants ou les filaments bicomposants de la deuxième couche (3) présentant une configuration âme-enveloppe excentrique et l'enveloppe des filaments (F) présentant une épaisseur d constante ou une épaisseur d sensiblement constante sur au moins 20 %, notamment sur au moins 30 %, de préférence sur au moins 40 % et préférentiellement, sur au moins 50 % de la périphérie des filaments.

15. Laminé filé-lié selon l'une quelconque des revendications 1 à 14, la fluidité à l'état fondu (MFR) du polyéthylène de la première composante des filaments (F) de la deuxième couche (3) étant supérieure à 15 g/10 mn, notamment supérieure à 20 g/10 mn et préférentiellement supérieure à 27 g/10 mn.

16. Laminé filé-lié selon l'une quelconque des revendications 10 à 15, la fluidité à l'état fondu (MFR) du polypropylène de la deuxième composante de la deuxième couche (3) s'élevant à plus de 25 g/10 mn, notamment à plus de 60 g/10 mn.

17. Laminé filé-lié selon l'une quelconque des revendications 1 à 16, le taux de crêpage des filaments (F) de la deuxième couche (3) étant inférieur ou égal au taux de crêpage des filaments (F) de la première couche (2).

18. Laminé filé-lié selon l'une quelconque des revendications 1 à 17, le grammage de la deuxième couche (3) étant inférieur au grammage de la première couche (2) et de préférence le grammage de la première couche (2) étant supérieur d'au moins un coefficient de 1,2, notamment d'au moins un coefficient de 1,3 et préférentiellement d'au moins un coefficient de 1,4 au grammage de la deuxième couche (3).

19. Laminé filé-lié selon l'une quelconque des revendications 1 à 18, le grammage du laminé filé-lié (1) étant inférieur à 30 g/m².

20. Laminé filé-lié selon l'une quelconque des revendications 1 à 19, la résistance du laminé filé-lié (1) dans la direction de la machine (MD) étant supérieure à 25 N/5 cm, le laminé filé-lié (1) présentant notamment un grammage de 12 à 50 g/m², de préférence de 20 à 30 g/m².

21. Laminé filé-lié selon l'une quelconque des revendications 1 à 20, l'épaisseur du laminé filé-lié (1) s'élevant à plus de 0,50 mm, notamment à plus de 0,53 mm et de préférence à plus de 0,55 mm, le laminé filé-lié (1) présentant notamment un grammage de 12 à 50 g/m², de préférence de 20 à 30 g/m².

22. Laminé filé-lié selon l'une quelconque des revendications 1 à 21, la différence entre le titre des filaments (F) de la première couche (2) et le titre des filaments (F) de la deuxième couche (3) s'élevant à au moins 0,2 den, préférentiellement à au moins 0,3 den et de manière recommandée, à un maximum de 1,1 den, préférentiellement à un maximum de 1,0 den.

23. Procédé, destiné à créer un laminé filé-lié (1), doté d'une multiplicité de couches de non-tissé filé-fondu (2, 3) superposées (notamment selon l'une quelconque des revendications 1 à 22), au moins deux des couches de non-tissé filé-fondu comportant des filaments continus crêpés ou étant constituées ou majoritairement constituées de filaments continus crêpés,
lors duquel l'on créé une première couche de non-tissé filé-fondu (2) dotée de filaments multicomposants ou filaments bicomposants crêpés, au moins une première composante placée sur la surface extérieure des filaments (F) de la première couche (2) étant constituée ou majoritairement constituée de polyéthylène,
une deuxième composante ou au moins une composante additionnelle des filaments (F) de la première couche (2) étant constituée ou majoritairement constituée d'une matière plastique dont le point de fusion est supérieur à celui du polyéthylène de la première composante des filaments (F) de la première couche (2),
lors duquel, l'on préconsolide la première couche, de préférence, on la préconsolide avec de l'air chaud et notamment on la préconsolide exclusivement avec de l'air chaud,
lors duquel, l'on créé une deuxième couche la plus extérieure de non-tissé filé-fondu (3), dotée de filaments multicomposants ou filaments bicomposants en tant que couche de couverture, au moins une première composante placée sur la surface extérieure des filaments (F) de la deuxième couche (3) étant constituée ou majoritairement constituée de polyéthylène,
une deuxième ou au moins une composante additionnelle des filaments (F) de la deuxième couche (3) étant constituée ou majoritairement constituée d'une matière plastique dont le point de fusion est supérieur à celui du polyéthylène de la première composante des filaments (F) de la deuxième couche (3),
lors duquel, l'on préconsolide la deuxième couche de non-tissé filé-fondu (3), de préférence, on la préconsolide avec de l'air chaud et notamment on la préconsolide exclusivement avec de l'air chaud,
la part de polyéthylène de la première composante des filaments (F) de la deuxième couche (3) étant supérieure à la part de polyéthylène de la première composante des filaments (F) de la première couche (2),
lors duquel, l'on procède à la préconsolidation finale du laminé filé-lié (1), de préférence à la préconsolidation finale avec de l'air chaud et notamment à la préconsolidation finale exclusivement avec de l'air chaud,
et le titre des filaments (F) de la deuxième couche extérieure (3) étant inférieur au titre des filaments (F) de la première couche (2).

24. Procédé selon la revendication 23, lors duquel l'on créé d'abord la deuxième couche de non-tissé filé-fondu (3) en tant que couche de couverture et on la préconsolide et lors duquel, l'on créé ensuite la première couche de non-tissé filé-fondu (2) ou on la créée sur la deuxième couche de non-tissé filé-fondu (3) et on la préconsolide par la suite.

25. Procédé selon l'une quelconque des revendications 23 ou 24, lors duquel l'on crée des filaments multicomposants ou filaments bicomposants crêpés pour la deuxième couche de non-tissé filé-fondu (3).
